# EUROPÄISCHE PATENTSCHRIFT

(11) **EP 0 701 777 B1**
(45) Veröffentlichungstag und Bekanntmachung des Hinweises auf die Patenterteilung: **13.03.2002**
(21) Anmeldenummer: 95108698.2
(22) Anmeldetag: 07.06.1995
(51) Int. Cl.: A23G 9/16, A23G 9/28, A23G 9/20, A23G 9/22

(54) **Vorrichtung zum Herstellen von Speiseeis, Milchshake oder dergleichen**
Apparatus for making ice creams, milkshake or the like
Appareil de fabrication de glaces cementibles, laits frappée ou analogues

(30) Priorität: 17.08.1994 DE 4429077
(43) Veröffentlichungstag der Anmeldung: 20.03.1996
(73) Patentinhaber: LUMEN GmbH Nährmittel- und Maschinenfabrik, D-95326 Kulmbach (DE)
(72) Erfinder: Röder, Hermann, D-95326 Kulmbach (DE); Gampert, Walter, D-95326 Kulmbach (DE)
(74) Vertreter: Rau, Manfred, Dr. Dipl.-Ing.

(56) Entgegenhaltungen:
- EP-A- 0 053 813
- EP-A- 0 503 254
- EP-A- 0 521 575
- GB-A- 2 154 204
- US-A- 3 180 106
- US-A- 3 185 348
- US-A- 5 114 045
- US-A- 5 349 825

## Beschreibung

Die Erfindung betrifft eine Vorrichtung nach dem Oberbegriff des Anspruches 1.

Aus der EP 0 503 254 A1 ist eine allerdings nur zur Herstellung von Speiseeis vorgesehene Vorrichtung der gattungsgemäßen Art bekannt, bei der dem Entnahmeventil eine Form- und Zuführeinrichtung zugeordnet ist, in deren Auslaßöffnung Zuführkanäle für eine förderfähige Zugabe-Masse, beispielsweise Fruchtsoße oder dergleichen einmünden. Diese Zuführkanäle sind über eine Förderleitung und ein ansteuerbares Ventil mit einem Behälter für die Zugabe-Masse verbunden. Die Ausgestaltung ist konstruktiv aufwendig und wirft erheblich bakteriologische Probleme auf. Die Zugabemasse, die in dem Behälter unter Druck steht, kann mittels dieses Druckes zu einem Entnahme-Ventil gefördert werden.

Aus der EP 0 521 575 ist eine Vorrichtung zur Herstellung und Ausgabe von Speiseeis bekannt. Der Ansatz wird über Schläuche, die um eine Peristaltik-Pumpe geführt werden, zu einem Gefrierbehälter geleitet Die Schläuche sind auch im eingebauten Zustand reinigbar, d. h. der Rotor der Peristaltik-Pumpe muß für Reinigungsarbeiten nicht entfernt werden. Die Reinigung muß allerdings per Hand erfolgen.

Aus der GB 2 154 204 ist eine Vorrichtung bekannt, bei der flüssige Lebensmittel durch eine Peristaltik-Pumpe zur Ausgabeöffnung befördert werden Im Schlauch können direkt an der Ausgabeöffnung nach abgeschlossener Förderung noch Reste verbleiben, die eine bakteriologische Gefahr darstellen.

Der Erfindung liegt daher die Aufgabe zugrunde, eine Vorrichtung der gattungsgemäßen Art so auszugestalten, daß die Zugabe der Soße zur besseren bakteriologischen Kontrolle vereinfacht wird.

Diese Aufgabe wird erfindungsgemäß durch die Merkmale im Kennzeichnungsteil des Anspruches 1 gelöst. Der die Soße enthaltende Schlauch-Beutel ist völlig verschlossen; auch der Auslauf-Schlauch ist anfangs zugeschweißt und wird erst beim Einhängen des Schlauch-Beutels abgeschnitten und mit der Zuführ-Kammer des Entnahme-Ventils verbunden. Durch den Einsatz der Peristaltik-Pumpe kommt die Soße mit keinem Teil der Pumpe in Berührung. Sie kommt nur mit der kurzen Schlauchverbindung zwischen dem Schlauch-Beutel und der Zuführ-Kammer des Entnahme-Ventils in Berührung. Der Schlauch-Beutel selber nebst Aushuf-Schlauch ist sterilisiert worden, bevor er mit Soße gefüllt worden ist, und bleibt während des Betriebes steril. Wenn der Auslauf-Schlauch bis zum Entnahme-Ventil geführt ist, können auf dem Weg bis dorthin keinerlei bakteriologische Probleme auftauchen. Wenn der Auslauf-Schlauch kürzer ist und ein gesonderter Soßenschlauch eingesetzt wird, dann ist dieser leicht zu reinigen. Wenn der Schlauch-Beutel gespannt aufgehängt wird, dann ist eine fast völlige Entleerung sichergestellt. Eine Abnehmbarkeit der Zuführ-Kammer ermöglicht eine leichte Reinigung. Ein Nachlaufen der Soße in die Auslaß-Öffnung wird dadurch verhindert, daß die Peristaltik-Pumpe am Ende des Zapfvorganges kurzzeitig entgegen der Förderrichtung angetrieben wird.

Weitere Merkmale, Vorteile und Einzelheiten der Erfindung ergeben sich aus der Beschreibung eines Ausführungsbeispieles anhand der Zeichnung. Es zeigt
- Fig. 1: eine Vorrichtung zur Herstellung von Speiseeis in einem schematisierten Vertikal-Längs-Schnitt,
- Fig. 2: die Vorrichtung nach Fig. 1 in einer Vorderansicht entsprechend dem Sichtpfeil II in Fig. 1,
- Fig. 3: einen Vertikalschnitt durch ein Entnahmeventil der Vorrichtung entsprechend der Schnittlinie III-III in Fig. 4,
- Fig. 4: einen Querschnitt durch das Entnahmeventil entsprechend der Schnittlinie IV-IV in Fig. 3,
- Fig.: 5 eine perspektivische Darstellung eines Beutelbehälters mit Schlauchbeutel der Vorrichtung in aufgebrochener Darstellung,
- Fig. 6: einen Schlauchbeutel mit nachgeordneter Peristaltik-Pumpe,
- Fig. 7: eine Teildraufsicht auf einen Beutelbehälter einer Vorrichtung zur Herstellung von Milchshake und

- Fig. 8: ein Entnahmeventil der Vorrichtung zur Herstellung von Milchshake.

Die Vorrichtung ist in ihrem Grundaufbau allgemein bekannt und zwar beispielsweise aus der EP 0 225 989 A1, der EP 0 229 237 A1 und der EP 0 503 254 A1. Sie weist ein über Rollen 1 auf dem Boden 2 abgestütztes, also verfahrbares Gehäuse 3 auf. Im oberen Bereich des Gehäuses 3 ist ein Gefrierzylinder 4 angeordnet, in den über eine Verbindungsleitung 5 ein oberhalb des Gefrierzylinders 4 angeordneter Vorratsbehälter 6 für einen fließfähigen Speiseeis-Ansatz einmündet. Dieser Vorratsbehälter 6 ist über einen an der Oberseite des Gehäuses 3 befindlichen Deckel 7 luftdicht verschließbar.

Im Gefrierzylinder 4 ist ein - zeichnerisch nur angedeutetes - Rühr- und Schabewerk 8 angeordnet, das von einem nicht dargestellten Motor über einen Riementrieb 9 antreibbar ist. In den Innenraum 10 des Gefrierzylinders 4 mündet eine Druckluftleitung 11 ein. Der Gefrierzylinder 4 ist weiterhin mit einem Kühlmantel 12 umgeben, durch den von einem nicht dargestellten Kälteaggregat kommendes Kältemittel transportiert werden kann. Durch diese Ausgestaltung ist es möglich, daß aus im Innenraum 10 befindlichem Speiseeis-Ansatz unter gleichzeitigem Lufteinschlag durch Rühren und unter Kühlen Speiseeis, sogenanntes Softeis, hergestellt wird. An dem der Einmündung der Verbindungsleitung 5 in den Innenraum 10 entgegengesetzten Ende des Innenraums 10 mündet aus letzterem ein Verbindungskanal 13 aus, der in ein Entnahmeventil 14, ein sogenanntes Zapftor, führt, durch das Eisportionen entnommen werden. Die Förderung des Speiseeis-Ansatzes und des fertigen Speiseeises im Innenraum 10 des Gefrierzylinders 4 erfolgt mittels des Rühr- und Schabewerks 8.

Im Gehäuse 3 ist ein von einem Elektro-Motor 15 antreibbarer Luftkompressor 16 vorgesehen. Die komprimierte Druckluft wird von dem Luftkompressor über eine Druckluftleitung 17 durch einen Filter 18 zu einem Druckluftspeicher 19 befördert. Von dort führt die Druckluftleitung 11 in den Innenraum 10 des Gefrierzylinders 4. Das in der Druckluftleitung 11 befindliche Ansteuerventil ist der Übersichtlichkeit halber fortgelassen.

Am Gehäuse 3 ist ein verschlossener Beutelbehälter 20 angebracht, in dem ein Schlauchbeutel 21 untergebracht wird, der dem Speiseeis zuzusetzende Soße enthält. Unterhalb des Schlauchbeutels 21 ist eine sogenannte Peristaltik-Pumpe 22 angeordnet, durch die ein vom Schlauchbeutel 21 zum Entnahmeventil 14 verlaufender Soßenschlauch 23 geführt ist. Auf Einzelheiten wird weiter unten noch eingegangen.

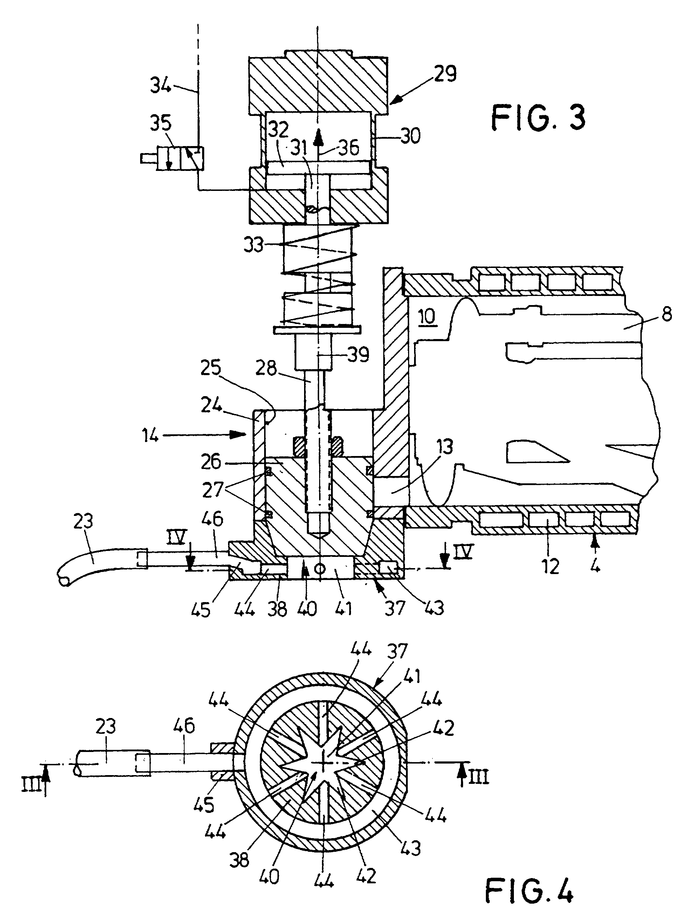

Das Entnahmeventil 14 weist ein Ventilgehäuse 24 auf, dessen Innenwand 25 im wesentlichen kreiszylindrisch und im unteren Bereich sich kegelstumpfförmig verjüngend ausgebildet ist. An dieser Innenwand 25 ist ein Ventilkolben 26 geführt, der zwei im Abstand voneinander befindliche Dichtungen 27 aufweist, die im geschlossenen Zustand des Entnahmeventils 14, der in Fig. 3 dargestellt ist, beiderseits der Einmündung des Verbindungskanals 13 liegen, so daß kein Speiseeis aus dem Innenraum 10 des Gefrierzylinders in das Entnahmeventil 14 gelangen kann. Der Ventilkolben 26 ist mittels einer Kolbenstange 28 mit einem Linearantrieb in Form eines pneumatisch beaufschlagbaren Kolben-Zylinder-Antriebs 29 verbunden, dessen Zylinder 30 relativ zum Gehäuse 3 ortsfest ist. Die Kolbenstange 28 des Ventilkolbens 26 ist mit der Kolbenstange 31 des Antriebs 29 verbunden, die wiederum mit einem Zylinder 30 verschiebbar angeordneten Kolben 32 verbunden ist. Zwischen dem Zylinder 30 und der Kolbenstange 28 des Ventilkolbens 26 ist eine Rückstellfeder 33 angeordnet, die den Ventilkolben 26 in seine in Fig. 3 dargestellte geschlossene Stellung drückt. Zum Öffnen des Entnahmeventils 14 wird der Antrieb 29 über eine mit dem Druckluftspeicher 19 verbundene Druckleitung 34 unter Ansteuerung durch ein Magnetventil 35 mit Druckluft beaufschlagt und in Öffnungsrichtung 36 des Entnahmeventils 14 verschoben. Bei Druckentlastung des Zylinders 30 über das Magnetventil 35 schließt die Rückstellfeder 33 das Entnahmeventil 14 wieder.

Das Entnahmeventil 14 ist an seiner Unterseite mit einer vom Ventilgehäuse 24 abnehmbaren Form- und Zuführeinrichtung 37 versehen, die im wesentlichen aus einer plattenförmigen Zuführ-Kammer 38 besteht. In dieser Zuführ-Kammer 38 ist konzentrisch zur Mittel-Längs-Achse 39 des Entnahmeventils 14 eine Auslaßöffnung 40 für Speiseeis ausgebildet. Diese Auslaßöffnung 40 ist im vorliegenden Fall nach Art eines sechszackigen Sterns gestaltet. Sie weist also eine Mittelöffnung 41 auf und sechs dreieckförmige Zusatzöffnungen 42, die zur Mittelöffnung 41 hin geöffnet sind, wie Fig. 4 entnehmbar ist. Daraus ergibt sich, daß durch die Auslaßöffnung 40 ein Speiseeisstrang ausgetragen wird, der den Querschnitt eines sechszackigen Sterns hat.

In der Form- und Zuführeinrichtung 37 ist um die Auslaßöffnung 40 herum und im radialen Abstand von dieser konzentrisch zur Achse 39 ein Ringkanal 43 ausgebildet, aus dem Zuführkanäle 44 radial jeweils zwischen zwei benachbarten Zusatzöffnungen 42 direkt peripher in die Mittelöffnung 41 einmünden. An der Zuführ-Kammer 38 ist ein in den Ringkanal 43 mündender Anschlußkanal 45 ausgebildet, an den der Soßenschlauch 23 mittels einer lösbaren Schlauchkupplung 46 anschließbar ist.

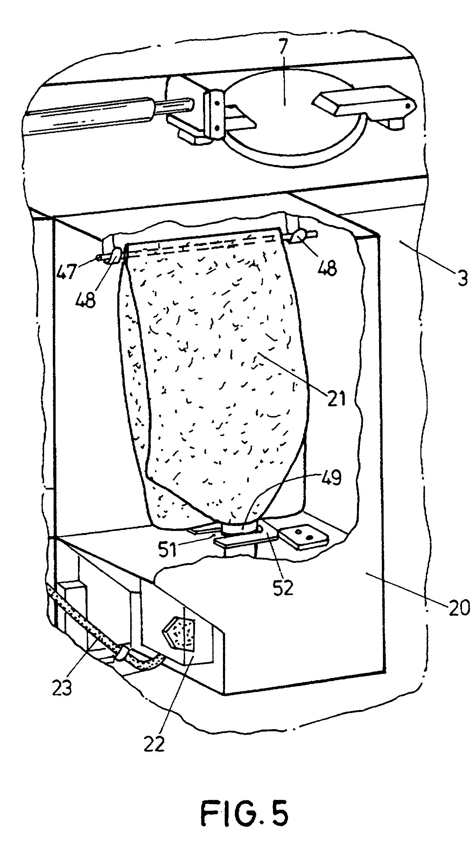

Wie Fig. 5 entnehmbar ist, wird der mit Soße, beispielsweise Fruchtsoße, gefüllte Schlauchbeutel 21 mit einer an seinem oberen Ende angebrachten oder anbringbaren Spreiz-Stange 47 in Haken 48 bzw. Ösen des Beutelbehälters 20 eingehängt. An dem der Spreiz-Stange 47 entgegengesetzten Ende ist der Schlauchbeutel 21 mit einer Auslauf-Muffe 49 versehen, die mit zwei einander benachbarten Ring-Stegen 50 versehen ist. Diese Muffe 49 wird in ein nach außen offenes Langloch 51 einer ortsfest im Beutelbehälter 20 angebrachten Halteplatte 52 eingeschoben, so daß ein Steg 50 oberhalb und ein Steg 50 unterhalb der Halteplatte 52 liegt. Hierdurch wird die Auslauf-Muffe 49 und damit der Schlauchbeutel 21 fixiert und gleichzeitig gegenüber der oberen Befestigung gespannt. An der Auslauf-Muffe 49 oder direkt am Schlauchbeutel 21 ist ein Auslauf-Schlauch 53 angebracht. Dieser Auslauf-Schlauch 53 ist an seinem freien Ende durch Verschweißen verschlossen. Das verschweißte freie Ende wird abgeschnitten und auf eine am Soßenschlauch 23 angebrachte Schlauchkupplung 54 gesteckt. Dadurch wird die Verbindung zwischen Schlauchbeutel 21 und Entnahmeventil 14 hergestellt.

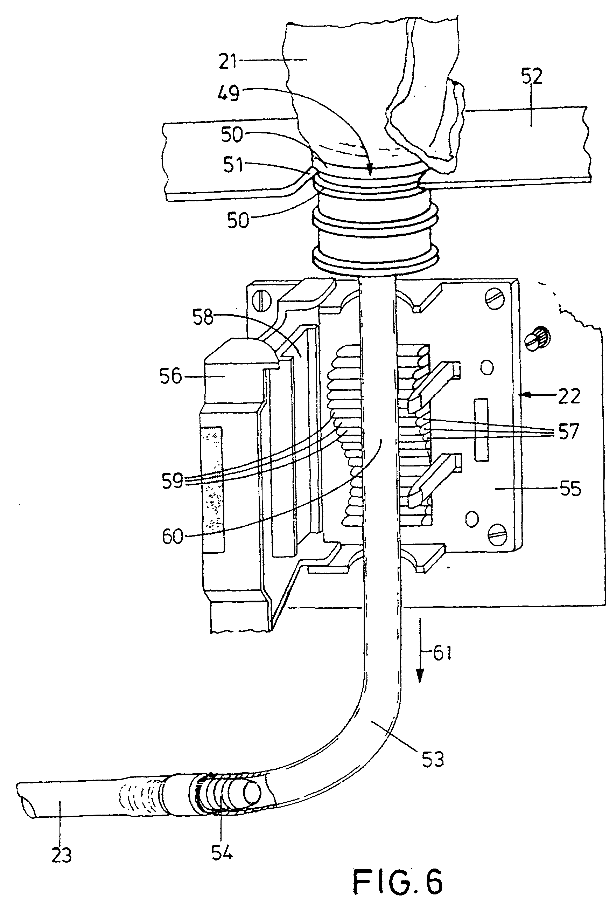

Der Auslaufschlauch 53 wird unterhalb der Halteplatte 52 in die Peristaltik-Pumpe 22 eingelegt. Diese besteht aus einer Grundplatte 55 und einer abschwenkbaren Widerlagerplatte 56. Auf der bei der Darstellung in Fig. 6 dem Betrachter abgewandten Seite der Grundplatte 55 ist ein nicht erkennbarer Exzenter-Antrieb vorgesehen, der zum Antrieb von Pump-Lamellen 57 dient, die quer zur Grundplatte 55 in dieser verschiebbar gelagert sind. Zwischen den Pump-Lamellen 57 und einem an der Widerlager-Platte 56 ausgebildeten Widerlager 58 ist der Auslauf-Schlauch 53 nach dem Heranschwenken der Widerlagerplatte 56 an die Grundplatte 55 und nach Verriegeln mit dieser eingeklemmt. Wenn die Pump-Lamellen 57 von dem Exzenterantrieb in der Weise angetrieben werden, daß sie von oben nach unten fortschreitend in Richtung auf das Widerlager 58 verschoben werden, dann wird aus dem Schlauchbeutel 21 in Richtung zum Entnahmeventil 14 hin gepumpt. Die Außenkanten 59 der Pump-Lamellen durchlaufen hierbei - wie Fig. 6 erkennen läßt - eine ständig von oben nach unten laufende Sinus-Welle.

So lange die Pumpbewegung andauert, läuft ständig Soße aus dem Schlauchbeutel 21 in den zwischen Pump-Lamellen 57 und Widerlager 58 befindlichen Pump-Abschnitt 60 des Auslauf-Schlauches 53 nach. Mindestens zwei einander benachbarte Pump-Lamellen 57 drücken den Pump-Abschnitt 60 des Auslauf-Schlauches 53 stets so fest gegen das Widerlager 58, daß der Schlauch 53 an dieser Stelle verschlossen ist. Beim Pumpvorgang wird eine in Förderrichtung 61 den erwähnten Pump-Lamellen 57 unmittelbar nachgeordnete Pump-Lamelle ebenfalls in Richtung zum Widerlager 58 gedrückt. Die Soße kann nur in Förderrichtung 61 entweichen, wird also zum Entnahmeventil 14 gefördert. Die entgegen der Förderrichtung 61 unmittelbar benachbarte bisher angepreßte Pump-Lamelle 57 wird zurückgezogen, so daß in diesem Bereich bereits wieder Soße nachfließen kann.

Zur Betätigung des Magnetventils 35, d.h. zum Öffnen des Entnahmeventils 14, ist ein Entnahme-Druckschalter 62 vorgesehen, bei dessen Betätigung das Magnetventil 35 öffnet und der Antrieb 29 mit Druckluft beaufschlagt wird. Zur Aktivierung des nicht dargestellten Antriebs der Peristaltik-Pumpe 22 ist ein Zusatzschalter 63 vorgesehen, bei dessen Schließen der Stromkreis des elektrischen Antriebs der Peristaltik-Pumpe 22 mit in den Stromkreis des Magnetventils 35 geschaltet wird. Dies wird durch eine Kontroll-Leuchte 64 am Gehäuse 3 angezeigt. Wenn in diesem Fall der Entnahme-Druckschalter 62 betätigt wird, wird nicht nur das Entnahmeventil 14 geöffnet, sondern auch die Peristaltik-Pumpe 22 verzögert in Gang gesetzt, sie wird auch gegenüber dem Entnahme-Ventil 14 verzögert ausgeschaltet, damit auch das von dem Ventilkolben 26 beim Schließen des Entnahmeventils 14 aus dem Ventilgehäuse 24 ausgestoßene Speiseeis mit Soße beaufschlagt wird. Durch die Auslaßöffnung 40 wird also nicht nur Speiseeis, sondern auch Soße, beispielsweise also ein Fruchtmark, ausgetragen, wobei letzteres in den Grund zwischen den dreieckförmigen Zusatzöffnungen 42 eingebracht wird.

Am Ende eines Zapfvorganges wird einerseits das Entnahmeventil 14 geschlossen und andererseits die Peristaltik-Pumpe 22 nicht nur angehalten, sondern kurzzeitig entgegen der Förderrichtung 61 angetrieben. Dadurch wird der Soßenschlauch 23 druckentlastet. Da die Zuführ-Kammer 38 sich neben oder oberhalb des unteren Endes der Peristaltik-Pumpe 22 befindet, findet somit kein Nachlauf von Soße in die Auslaßöffnung 40 statt.

Das Widerlager 58 ist gegenüber der Widerlagerplatte 56 federnd gelagert, damit Auslauf-Schläuche 53 unterschiedlichen Durchmessers eingesetzt werden können. Durch die Einspannung des Schlauchbeutels 21 wird erreicht, daß dieser nahezu vollständig entleert wird. Der Auslauf-Schlauch 53 und der Soßenschlauch 23 bestehen aus weichelastischem Material, beispielsweise Silikonkautschuk.

Der Gefrier-Zylinder 4 kann auch als Kühl-Zylinder 4 ausgebildet sein, in dem Milch unter gleichzeitigem Lufteinschlag gekühlt wird. Beim Zapfen der Milch wird dann durch gleichzeitige Soßenzugabe ein Milchshake-Getränk erzeugt und gezapft. Die Zuführ-Kammer kann in diesem Fall zweckmäßigerweise so ausgebildet sein, daß eine kräftige Durchwirbelung der Milch und der Soße stattfindet.

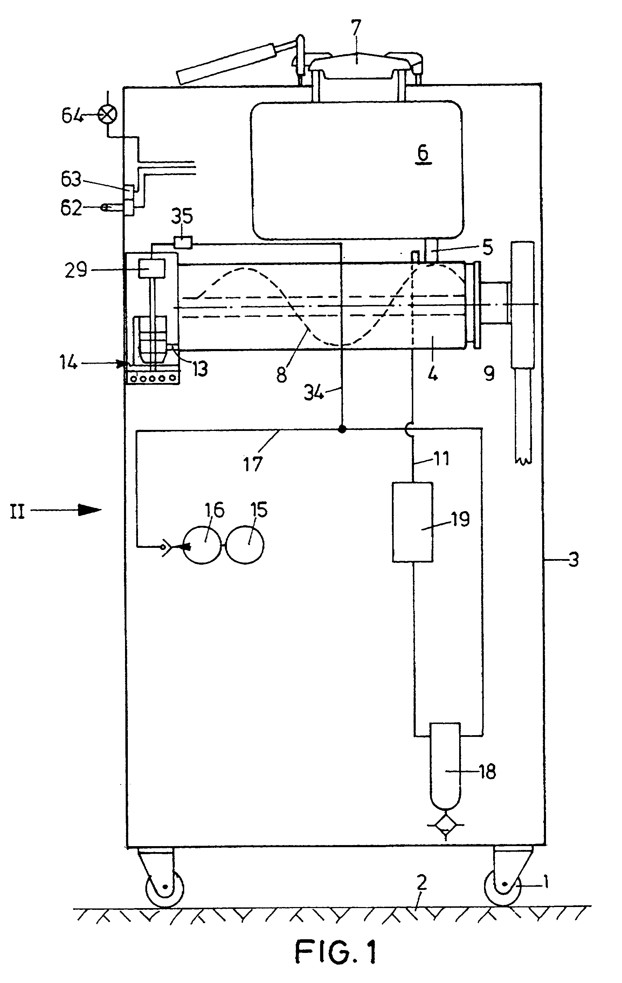

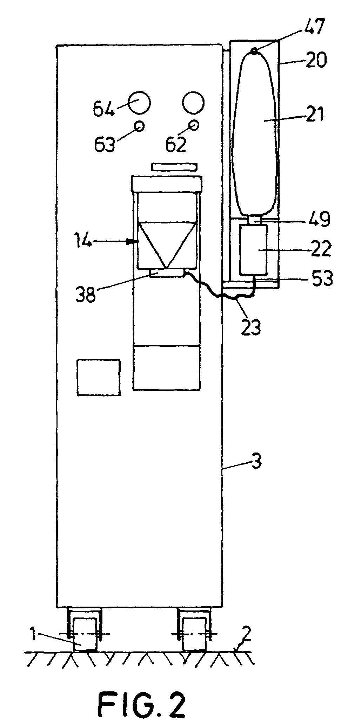

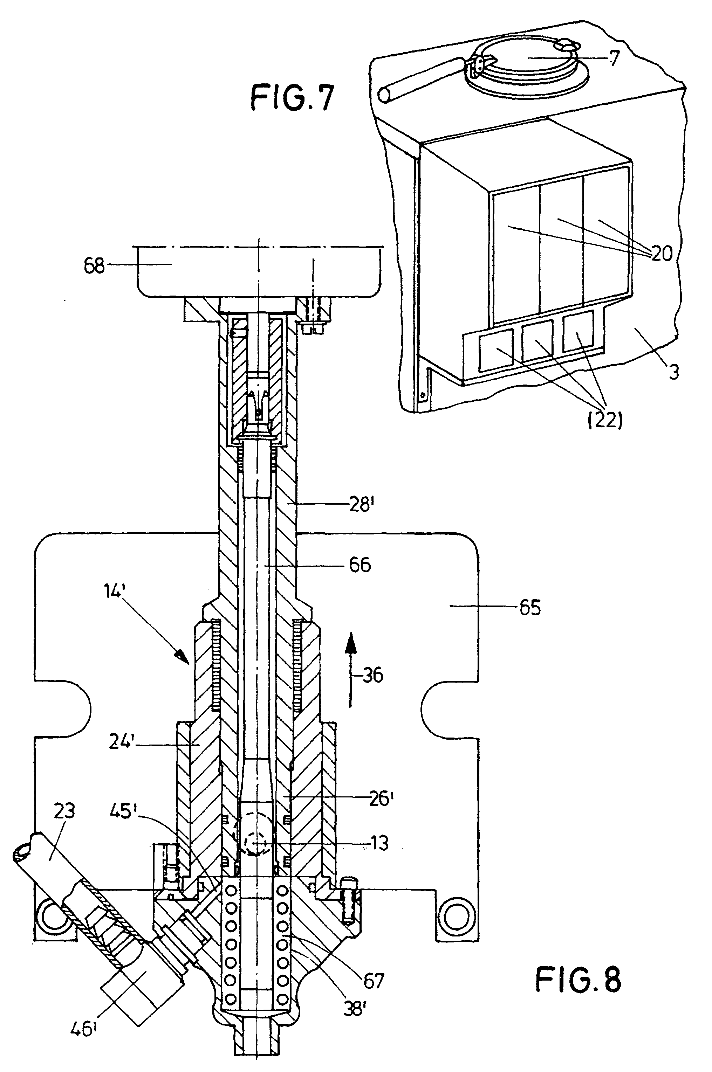

Wie sich aus Fig. 7 ergibt, sind in diesem Falle am Gehäuse 3 insgesamt drei Beutelbehälter 20 angebracht, die lediglich um 90° gegenüber der Position nach Fig. 2 gedreht sind. Sie sind also nicht von der Front, sondern von der Seite des Gehäuses 3 aus zu bedienen. In diesen drei Beutelbehältern 20 sind in der gleichen Weise wie bei der Ausführungsform nach den Fig. 1 bis 6 jeweils ein Schlauchbeutel, insgesamt also drei Schlauchbeutel, angeordnet, die drei verschiedene Soßen enthalten. Die drei Beutelbehälter 20 können selbstverständlich zu einer Einheit zusammengefaßt sein.

Wie Fig. 8 entnehmbar ist, weist das Entnahmeventil 14' ein Ventilgehäuse 24' auf, das auf einer am Gehäuse 3 angebrachten Grundplatte 65 befestigt ist. In das Ventilgehäuse mündet ein Verbindungskanal 13 aus dem Kühlzylinder, der gleich aufgebaut ist wie der Gefrierzylinder 4. Es ist ein hohl ausgebildeter Ventilkolben 26' vorgesehen, der beispielsweise mittels eines hier nicht erneut dargestellten Kolben-Zylinder-Antriebs 29 in Öffnungsrichtung 36 verschiebbar ist. In der hohl ausgebildeten Kolbenstange 28' und im hohl ausgebildeten Kolben 26' verläuft eine Antriebswelle 66 für ein Mischwerkzeug 67, das in einer als Mischkammer dienenden Zuführ-Kammer 38' angeordnet ist. Der Antrieb erfolgt von einem Elektromotor 68, der am oberen Ende der Kolbenstange 28' angeflanscht ist. Diese Einheit wird von dem nicht mehr dargestellten oberhalb des Elektromotors 68 befindlichen Kolben-Zylinder-Antrieb in Öffnungsrichtung 36 und umgekehrt verschoben. Beim Öffnen des Entnahme-ventils, wenn also der Ventilkolben 26' bis oberhalb des Verbindungskanals 13 verschoben wird, gelangt der obere Bereich des Mischwerkzeuges 67 vor diese Öffnung, so daß das Verwirbeln der zufließenden Milch bereits hier einsetzt. In die als Mischkammer dienende Zuführ-Kammer 38' münden insgesamt drei Soßenschläuche 23 ein, die jeweils mittels einer Schlauchkupplung 46' an die Zuführ-Kammer 38' lösbar angeschlossen sind, wobei nur eine dargestellt ist. Von jeder Schlauchkupplung 46' führt jeweils ein in der Zuführ-Kammer 38'ausgebildeter Anschlußkanal 45' in die Zuführ-Kammer 38'. In der Schlauchkupplung 46' kann noch ein Ventil angebracht sein, worauf es in diesem Zusammenhang nicht ankommt. Bei Vorhandensein eines Ventils ist bei der Vorrichtung zur Herstellung von Milchshake nicht erforderlich, daß die Peristaltik-Pumpe 22 am Ende eines Zapfvorganges zur Druckentlastung kurzzeitig rückwärts läuft.

Auch bei dieser Ausgestaltung ist im übrigen die Zuführ-Kammer 38' vom Entnahme-Ventil 14' abnehmbar ausgebildet.

## Patentansprüche

1. Vorrichtung zum Herstellen von Speiseeis, Milchshake o. dgl., jeweils aus einem pumpfähigen Ansatz,
- mit einem Vorratsbehälter (6) für den Ansatz,
- mit einem mit dem Vorratsbehälter (6) verbundenen Kühl- oder Gefrier-Behälter (4),
- mit einem an den Kühl- oder Gefrierbehälter (4) angeschlossenen Entnahmeventil (14, 14') für Speiseeis, Milch o. dgl.,
- mit einer Vorratseinrichtung für dem Speiseeis, der Milch o. dgl. zuzugebende Soße,
- mit einer Fördereinrichtung für die Soße und
- mit einer dem Entnahmeventil (14, 14') zugeordneten mit der Fördereinrichtung verbundenen Zuführ-Kammer (38, 38') zum Zusammenbringen von Speiseeis, Milchshake o. dgl. jeweils mit Soße,
**dadurch gekennzeichnet,**
**daß** die Vorratseinrichtung als auswechselbarer Schlauch-Beutel (21) ausgebildet ist,
**daß** die Fördereinrichtung als unterhalb des Schlauch-Beutels (21) angeordnete Peristaltik-Pumpe (22) ausgebildet ist,
**daß** ein mit dem Schlauch-Beutel (21) festverbundener Auslauf-Schlauch (53) durch die Peristaltik-Pumpe (22) geführt und an die Zuführ-Kammer (38, 38') angeschlossen ist und
**daß** die Peristaltik-Pumpe (22) derart augetrieben ist, dass sie nach Beendigung eines Zapfvorgangs rückwärts läuft.

2. Vorrichtung nach Anspruch 1, **dadurch gekennzeichnet, daß** der Schlauch-Beutel (21) vertikal gespannt aufgehängt ist.

3. Vorrichtung nach Anspruch 2, **dadurch gekennzeichnet, daß** der Schlauch-Beutel (21) in einem Beutelbehälter (20) gespreizt aufgehängt und an seinem dem Austritt des Auslauf-Schlauches (53) zugeordneten Endes festgehalten ist.

4. Vorrichtung nach einem der Ansprüche 1 bis 3, **dadurch gekennzeichnet, daß** der Auslauf-Schlauch (53) mit einem Pump-Abschnitt (60) zwischen einem Widerlager (58) und Pump-Lamellen (57) angeordnet ist, die derart antreibbar sind, daß ihre dem Pump-Abschnitt (60) zugeordneten Außenkanten (59) sich nach Art einer Welle in Förderrichtung (61) zum Pump-Abschnitt (60) hin bewegen.

5. Vorrichtung nach einem der Ansprüche 1 bis 4, **dadurch gekennzeichnet, daß** der Auslauf-Schlauch (53) des Schlauch-Beutels (21) mittels einer Schlauchkupplung (54) lösbar mit einem zur Zuführ-Kammer (38) führenden Soßenschlauch (23) verbunden ist.

6. Vorrichtung nach einem der Ansprüche 1 bis 5, **dadurch gekennzeichnet, daß** der vom Schlauch-Beutel (21) zur Zuführ-Kammer (38, 38') führende Schlauch (23, 49) mit der Zuführ-Kammer (38, 38') mittels einer lösbaren Schlauchkupplung (46, 46') verbunden ist.

7. Vorrichtung nach einem der Ansprüche 1 bis 6, **dadurch gekennzeichnet, daß** die Zuführ-Kammer (38, 38') vom Entnahme-Ventil (14, 14') abnehmbar ausgebildet ist.

## Claims

1. An apparatus for making ice cream, milkshake or the like from a pumpable preparation, comprising
- a reservoir (6) for the preparation;
- a cooling or freezing container (4) joined to the reservoir (6);
- a dispenser valve (14, 14') for ice cream, milk or the like that is connected to the cooling or freezing container (4);
- a storage equipment for sauce that is to be added to the ice cream, milk or the like;
- a supply equipment for the sauce; and
- a feed chamber (38, 38') that is allocated to the dispenser valve (14, 14') and joined to the supply equipment, serving to add sauce to the ice cream, milkshake or the like,
**characterized**
**in that** the storage equipment is a replaceable tubular bag (21);
**in that** the supply equipment is a peristaltic pump (22) disposed underneath the tubular bag (21);
**in that** a discharging tube (53), which is tightly joined to the tubular bag (21), is guided through the peristaltic pump (22) and connected to the feed chamber (38, 38'); and
**in that** the peristaltic pump (22) is actuated in such a way that it works reversely after termination of the tapping job.

2. An apparatus according to claim 1, **characterized in that** the tubular bag (21) is suspended in a manner vertically stretched.

3. An apparatus according to claim 2, **characterized in that** the tubular bag (21) is suspended and spread in a bag container (20) and is retained by its end that is allocated to the outlet of the discharging tube (53).

4. An apparatus according to one of claims 1 to 3, **characterized in that** a pumping section (60) of the discharging tube (53) is disposed between an abutment (58) and pumping lamellae (57) which are drivable in such a way that their outer edges (59), which are allocated to the pumping section (60), move in the way of a shaft in the supply direction (61) toward the pumping section (60).

5. An apparatus according to one of claims I to 4, **characterized in that,** by means of a tube coupling (54), the discharging tube (53) of the tubular bag (21) is releasably joined to a sauce tube (23) that leads to the feed chamber (38).

6. An apparatus according to one of claims 1 to 5, **characterized in that** the tube (23, 49) that leads from the tubular bag (21) to the feed chamber (38, 38') is joined to the feed chamber (38, 38') by means of a releasable tube coupling (46, 46').

7. An apparatus according to one of claims 1 to 6, **characterized in that** the feed chamber (38, 38') is detachable from the dispenser valve (14, 14').

## Revendications

1. Appareil pour la préparation de glaces comestibles, de boissons frappées au lait dites milk-shakes, ou similaires, à partir d'un produit de départ susceptible d'être pompé, comprenant:
- un récipient de réserve (6) pour le produit de départ,
- un récipient de rafraîchissement ou de congélation (14) relié au récipient de réserve (6),
- une soupape de prélèvement (14, 14') pour la glace, le lait ou similaire, raccordé au récipient de rafraîchissement ou de congélation (4),
- un dispositif de réserve pour une sauce à ajouter à la glace, au lait ou similaire,
- un dispositif de convoyage pour la sauce, et
- une chambre d'amenée (38, 38') associée à la soupape de prélèvement (14, 14') et reliée au dispositif de convoyage afin de regrouper la glace, le lait frappé ou similaire avec la sauce,
**caractérisé en ce que**
- le dispositif de réserve est réalisé sous la forme d'un sac tubulaire interchangeable (21),
- le dispositif de convoyage est réalisé sous la forme d'une pompe péristaltique (22) agencée au-dessous du sac tubulaire (21),
- un tuyau de sortie (53), fermement reliée au sac tubulaire (21), est passé à travers la pompe péristaltique (22) et raccordé à la chambre d'amenée (38, 38'), et **en ce que** la pompe péristaltique (22) est entraînée de telle manière qu'elle se déplace en sens arrière après terminaison d'une opération de soutirage.

2. Appareil selon la revendication 1, **caractérisé en ce que** le sac tubulaire (21) est suspendu verticalement et de manière tendue.

3. Appareil selon la revendication 2, **caractérisé en ce que** le sac tubulaire (21) est suspendu de manière écartée dans un récipient à sac (20), et **en ce qu'**il est fermement maintenu à son extrémité associée à la sortie du tuyau de sortie (53).

4. Appareil selon l'une des revendications 1 à 3, **caractérisé en ce que** le tuyau de sortie (53) est agencé avec un tronçon de pompe (60) entre un appui (58) et des ailettes de pompe (57), lesquelles sont susceptibles d'être entraînées de telle manière que leurs arêtes extérieures (59) associées au tronçon de pompe (60) se déplacent à la manière d'une onde dans la direction de convoyage (61) vers le tronçon de pompe (60).

5. Appareil selon l'une des revendications 1 à 4, **caractérisé en ce que** le tuyau de sortie (53) du sac tubulaire (21) est relié, au moyen d'un accouplement de tuyau (54), de façon détachable à un tuyau à sauce (23) qui mène à la chambre d'amenée (38).

6. Appareil selon l'une des revendications 1 à 5, **caractérisé en ce que** le tuyau (23, 49) qui mène depuis le sac tubulaire (21) à la chambre d'amenée (38, 38) est relié à la chambre d'amenée (38, 38') au moyen d'un accouplement de tuyau détachable (46, 46').

7. Appareil selon l'une des revendications 1 à 6, **caractérisé en ce que** la chambre d'amenée (38, 38') est réalisée de manière amovible depuis la soupape de prélèvement (14, 14').
